# EUROPÄISCHE PATENTANMELDUNG

(11) **EP 0 602 329 A2**
(43) Veröffentlichungstag der Anmeldung: **22.06.1994**
(21) Anmeldenummer: 93115129.4
(22) Anmeldetag: 21.09.1993
(51) Int. Cl.: C02F 1/40, E03F 5/14, E03F 5/16, B01D 21/02, B01D 21/24

(54) **Abscheidegefäss für mit Leicht- und Sinkstoffen verschmutzte Abwässer**

(30) Priorität: 15.12.1992 DE 9217018 U
(71) Anmelder: PASSAVANT-WERKE AG, D-65322 Aarbergen 7 (DE)
(72) Erfinder: Weiler, Walter, Dipl.-Ing., D-65582 Diez (DE); Bachon, Ulrich, Dipl.-Ing., D-65582 Diez (DE)

(57) **Zusammenfassung**

Für Volksfeste und ähnliche Veranstaltungen besteht ein Bedarf an Abscheidern, die das Koch- und Bratfett aus den Spülwässern abscheiden. Auch die im Spülwasser enthaltenen Sinkstoffe müssen zurückgehalten werden. Der für diese Anwendungsfälle modifizierte, vorzugsweise mobile Abscheider enthält eine zwischen der Sink- und Schwimmschicht verstellbar angeordnete Abzugsarmatur für das zwischen den Schichten anstehende Reinwasser. Das Reinwasser wird auf diese Weise abgelassen, bevor der Abscheidebehälter zum Wiederverwertungsbetrieb verbracht wird. Die Abzugsarmatur hat vorzugsweise die Form eines Schwenkrohres mit vergrößertem Mundstück.

## Beschreibung

Die Neuerung betrifft einen Abscheider in Gefäßform zum Klären von mit Leicht- und Sinkstoffen verschmutzte Abwässer, insbesondere für die bei der Speisezubereitung anfallenden fett- und sinkstoffhaltigen Abwässer.

Für Volksfeste und ähnliche Veranstaltungen besteht ein Bedarf an Abscheidern, die an die Speisezubereitungs- und Spüleinrichtungen angeschlossen werden müssen, um Fett-, Öl und Speisereste abzutrennen. Bekannt ist für diesen Zweck ein mobiles Abscheidegefäß (DE-GM 91 01 345), das mit einem Rollengestell und Handgriffen versehen ist. Dieses Abscheidegefäß, das so ausgelegt ist, daß es die bei der verausgabten Essenzahl anfallenden Trennstoffe speichern kann, wird nach dem Ende des Festes verschlossen und von dem beauftragten Entsorgungsunternehmen abgeholt und später entleert und gereinigt wieder zur Verfügung gestellt. Der Abscheiderinhalt muß bei der Wiederverwertungsgesellschaft erst noch in Wasser und Trennstoffschichten aufgeteilt werden. Das zwischen den Trennschichten anstehende Klarwasser ist dann unnötigerweise schon bis zum Wiederverwerter transportiert worden. Das neue Abscheidegefäß ist demnach dadurch gekennzeichnet, daß in dem Abscheidegefäß eine zwischen den beiden abgetrennten Schichten in der Höhe verstellbare Abzugsarmatur für die Reinwasserphase vorgesehen ist. Mit dieser Armatur kann nach dem Ende der Veranstaltung die Reinwasserphase abgelassen und in die Kanalisation geleitet werden. Im Abscheidegefäß befinden sich dann nur noch die abgetrennten Leicht- und Sinkstoffe, die zum Wiederverwerter verbracht werden. Um kontrollieren zu können, daß von den Trennschichten nichts abgezogen wird, wird ein außerhalb des Gefäßes liegendes Bauteil transparent ausgebildet. Die Abzugsarmatur hat vorzugsweise die Form eines um ein unteres Rohrgelenk schwenkbaren Abzugsrohres.

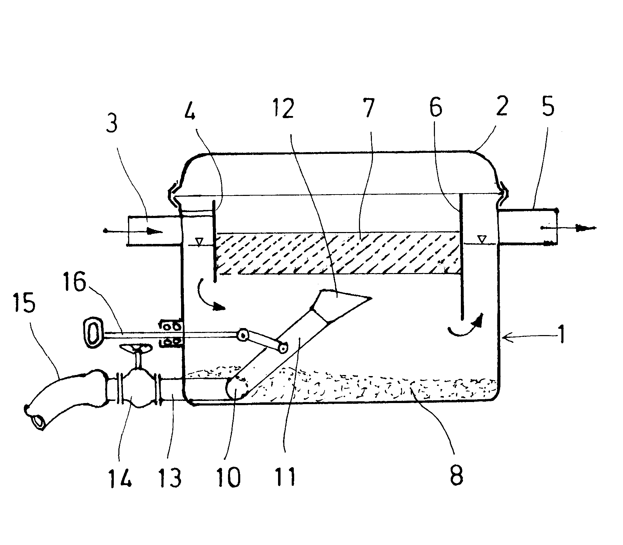

Die Abbildung zeigt eine Ausführungsform eines neuerungsgemäßen Abscheidegefäßes im vertikalen Längsschnitt.

Der als Gefäß 1 mit Deckel 2 ausgebildete Abscheider enthält wie üblich eine hinter dem oberen Zulauf 3 angeordnet Umlenkplatte 4 und vor dem gegenüberliegenden Reinwasserauslauf 5 eine Tauchwand 6, die die aufgeschwommenen Leichtstoffe 7 zurückhält. Die Unterkante der Tauchwand ist so hoch gelegt, daß die bereits abgesetzten Sinkstoffe 8 nicht mit ausgeschwemmt werden können.

Zum Abzug der Reinwasserphase dient ein um ein unteres Rohrgelenk 10 schwenkbares Ablaufrohr 11 mit oberer erweiterter Einlauföffnung 12. Das Rohrgelenk geht außen in einen Rohrstutzen 13 und ein Absperrventil 14 über. An das Absperrventil kann mittels einer Schnellkupplung ein Klarsichtschlauch 15 angeschlossen werden, mit dem das Reinwasser in einen Ablauf geleitet wird. Als Betätigung für das schwenkbare Ablaufrohr 11 dient eine Schubstange 16, die durch eine abgedichtete Bohrung nach außen geführt ist.

Mit dem Abziehen des Reinwassers wird in einer mittleren Stellung des Ablaufrohres begonnen. Sobald sich im Klarsichtschlauch die ersten Spuren von Leichtstoffen zeigen, wird das Ablaufrohr langsam nach unten geschwenkt. Der Abzug muß beendet werden, wenn sich auch die ersten Spuren von Sinkstoffen im auslaufenden Reinwasser zeigen. Das Absperrventil 14 wird dann sofort geschlossen. Das Abscheidegefäß ist bereit für die Abholung.

Anstelle des Absperrventils kann ein Ablaufschlauch treten, der im Betrieb des Fettabscheiders über den im Abscheidegefäß herrschenden Spiegel hochgehängt wird. Zum Ablaufenlassen wird der Ablaufschlauch ausgehängt.

Bei einer anderen Ausführungsform der Neuerung kann das Ablaufrohr knieförmig als Rohrgelenk durch die Gefäßwand nach außen gezogen sein. An dem außenliegenden Schenkel des Rohrknies ist ein Hebel zum Schwenken befestigt.

## Patentansprüche

1. Abscheidegefäß für mit Leicht- und Sinkstoffen verschmutzte Abwässer, insbesondere für bei der Speisezubereitung anfallende Abwässer, enthaltend einen oberen, von einem Ablenkorgan gebremsten Zulauf und einen gegenüberliegenden von einer Tauchwand geschützten Reinwasserablauf, gekennzeichnet durch eine zwischen den beiden abgetrennten Schichten (7, 8) in der Höhe verstellbare Abzugsarmatur (11) für die Reinwasserphase.

2. Abscheidegefäß nach Anspruch 1, dadurch gekennzeichnet, daß die Abzugsarmatur als um ein unteres Rohrgelenk (10) schwenkbares Abzugsrohr (11) ausgebildet ist.

3. Abscheidegefäß nach Anspruch 1 oder 2 gekennzeichnet durch ein außen an das Gefäß (1) angesetztes Absperrorgan (14) für die Abzugsarmatur.

4. Abscheidegefäß nach Anspruch 1 oder 2, gekennzeichnet durch einen außen an das Gefäß (1) angesetzten Ablaufschlauch, der zwecks Unterbrechung des Reinwasserabzugs bis über den Wasserspiegel im Gefäß (1) hochgehoben werden kann.

5. Abscheidegefäß nach Anspruch 4, dadurch gekennzeichnet, daß der Ablaufschlauch über eine Schnellkupplung angeschlossen ist.

6. Abscheidegefäß nach einem der Ansprüche 1 bis 5, dadurch gekennzeichnet, daß das am Gefäß (1) außen angesetzte Absperrorgan (14) oder die Schnellkupplung und/oder der Ablaufschlauch (15) transparent ausgebildet ist.

7. Abscheidegefäß nach einem der Anspruch 1 bis 6, gekennzeichnet, durch einen das Abscheidegefäß (1) verschließenden Deckel (2).

8. Abscheidegefäß nach Anspruch 7, dadurch gekennzeichnet, daß der Verschluß für den Deckel (2) als Faßband ausgebildet ist.
